# FASCICULE DE BREVET EUROPEEN

(11) **EP 3 234 311 B1**
(45) Date de publication et mention de la délivrance du brevet: **27.01.2021**
(21) Numéro de dépôt: 15823636.4
(22) Date de dépôt: 14.12.2015
(51) Int. Cl.: F01D 25/28, F16B 37/04, F02C 7/00, F16B 5/06, F16B 19/02, F16B 33/00

(54) **SYSTÈME DE RÉPARATION D'UNE ATTACHE ÉQUIPANT UNE PAROI DE RÉACTEUR**
SYSTEM ZUR REPARATUR EINER BEFESTIGUNG EINER REAKTORWAND
SYSTEM FOR REPAIRING A FASTENER EQUIPPING A REACTOR WALL

(30) Priorité: 15.12.2014 FR 1462434
(43) Date de publication de la demande: 25.10.2017
(73) Titulaire: SAFRAN AIRCRAFT ENGINES, 75015 Paris (FR)
(72) Inventeur: SARAZIN, Yann, Christophe, Maurice, 77550 Moissy Cramayel (FR); CHARBONNIER, Simon, Pierre, Claude, 77550 Moissy Cramayel (FR); REGHEZZA, Patrick, Jean-Louis, 77550 Moissy Cramayel (FR); ROSET, Julien, 77550 Moissy Cramayel (FR)
(74) Mandataire: Brevalex
(86) Numéro de dépôt international: PCT/FR2015/053463
(87) Numéro de publication internationale: WO 2016/097552

(56) Documents cités:
- EP-A2- 2 325 443
- EP-A2- 2 518 282
- GB-A- 2 428 762
- JP-A- H08 188 098
- JP-U- H0 480 917
- US-A- 4 981 735
- US-A1- 2007 297 869
- US-A1- 2014 069 106

## Description

### DOMAINE TECHNIQUE

L'invention concerne la fixation de panneaux à une virole de moteur de type turboréacteur à double flux équipé de vannes ou portes de décharge aptes à mettre en communication les deux flux, ces vannes ou portes de décharge débouchant à travers la paroi de cette virole, les panneaux couvrant cette virole en étant espacés de celle-ci.

### ÉTAT DE LA TECHNIQUE ANTÉRIEURE

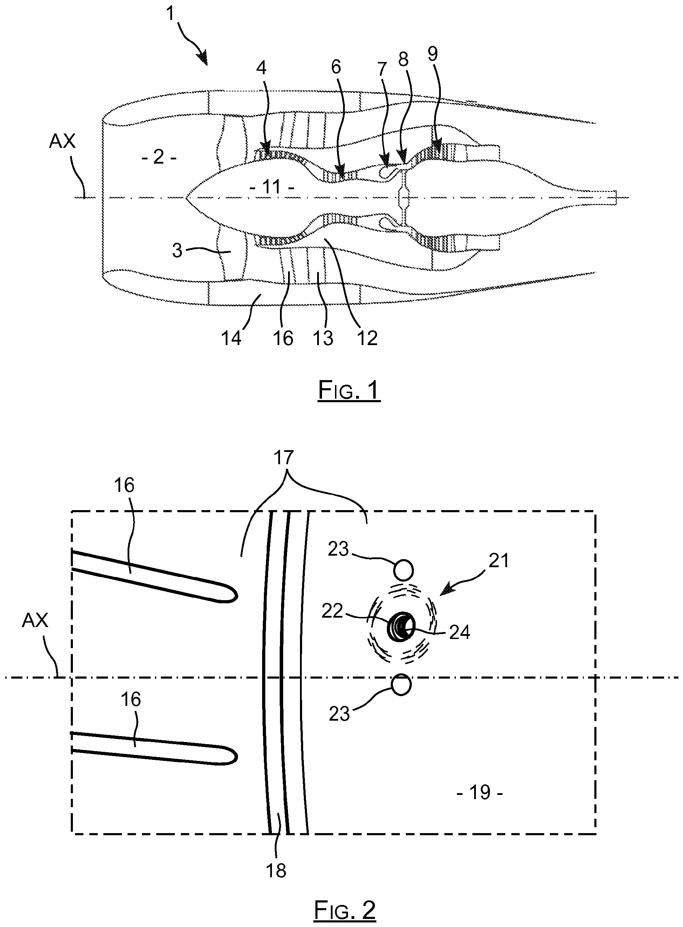

Un turboréacteur à double flux 1 tel que celui de la figure 1, comporte une manche d'entrée 2 dans laquelle est admis l'air pour être aspiré par une soufflante 3, avant de se diviser en un flux primaire central et un flux secondaire entourant le flux primaire.

Le flux primaire traverse ensuite un compresseur basse pression 4 alors que le flux secondaire est propulsé vers l'arrière pour générer une poussée. Le flux primaire traverse ensuite un compresseur haute pression 6, avant d'atteindre une chambre de combustion 7 pour être détendu dans une turbine haute pression 8 puis dans une turbine basse pression 9, avant d'être expulsé.

Chaque turbine et chaque compresseur comporte des aubes portées par un arbre central ou rotor 11 orienté selon un axe longitudinal AX en étant porté par un carter intermédiaire 12 qui l'entoure. Ce carter intermédiaire 12 est maintenu par des bras radiaux 13 qui le relient à un carter principal 14 qui l'entoure.

Plus concrètement, le flux primaire circule dans un espace annulaire délimité intérieurement par le rotor 11 et extérieurement par le carter intermédiaire 12, et le flux secondaire circule dans un autre espace annulaire délimité intérieurement par le carter intermédiaire et extérieurement par le carter principal 14.

Le flux secondaire ayant traversé la soufflante 3 est redressé par une série d'aubes fixes 16, portées par une virole cylindrique qui s'étend dans le prolongement du carter intermédiaire 12 vers la soufflante, ces aubes fixes étant ainsi en amont des bras radiaux 13 portant le carter intermédiaire.

La virole qui est visible dans la figure 2 où elle est repérée par 17, comporte en aval des aubes 16 qu'elle porte un décrochement délimité par un rebord circulaire 18. La portion de la virole 17 en aval de ce rebord, repérée par 19, présente ainsi un diamètre inférieur à celui de la portion de virole amont.

Cette portion aval 19 de la virole porte une série de panneaux non représentés qui s'étendent chacun depuis le rebord 18 jusqu'entre deux bras radiaux 13 de maintien du carter intermédiaire. Chaque panneau est maintenu par plusieurs attaches du type de l'attache 21 à distance de la face externe de la portion aval 19 de la virole, de telle sorte que ces panneaux s'étendent dans le prolongement de la portion amont de la virole.

Ces panneaux recouvrent des ouvertures dans lesquelles débouchent des portes de décharge qui sont ouvertes dans certaines situations pour évacuer de l'air directement depuis le flux primaire vers le flux secondaire, pour notamment éviter l'établissement d'un régime de pompage du turboréacteur.

Ces panneaux délimitent ainsi une surface interne d'écoulement du flux secondaire qui prolonge la portion amont de la virole, pour ne pas perturber ce flux secondaire tout en permettant l'évacuation d'air issu du flux primaire via les portes de décharge, cet air étant évacué dans une région aval des panneaux.

L'attache 21 assurant le maintien d'un tel panneau comporte un trou 22 traversant la paroi de la virole, et un écrou-cage maintenu par une patte fixée par deux rivets ou analogues 23 pour être situé en vis-à-vis de ce trou 22. Le panneau est solidarisé à cette attache 21 au moyen d'une vis traversant successivement ce panneau et une entretoise circulaire qui permet d'établir un espace entre le panneau et la face externe de la portion aval de la virole.

Compte tenu des contraintes vibratoires et de l'environnement de fonctionnement, il apparaît que la vis de maintien du panneau tend à se desserrer, ce qui donne lieu à une ovalisation du trou 22 pouvant conduire à la destruction de la cage dans laquelle l'écrou 24 est monté flottant, et à une détérioration de la surface de contact autour de ce trou dans la région de l'attache.

Les documents US2014/069106 A1, US2007/297869 A1 et JPH0480917 U décrivent des systèmes de fixation selon l'art antérieur.

Un but de l'invention est de proposer une fixation d'un tel panneau dont l'implantation dans une virole soit simple, d'une part sur un moteur neuf, et d'autre part sur un moteur existant en remplacement d'une attache détériorée.

### EXPOSÉ DE L'INVENTION

L'invention concerne un système de fixation destiné à équiper une paroi de turbomachine selon la revendication 1.

L'invention a également pour objet un système ainsi défini, dans lequel le corps de douille comporte un rebord externe venant en appui sur une face de la paroi dans laquelle ce corps de douille est monté, pour former un appui de serrage du corps de douille contre la paroi.

L'invention a également pour objet un système ainsi défini, dans lequel la cage est bloquée en rotation dans le corps de douille par au moins une clavette insérée à force dans une rainure longitudinale externe de la cage, cette clavette ciselant les filets du trou taraudé lorsqu'elle est insérée une fois que la cage est en place dans le corps de douille.

L'invention a également pour objet un moteur d'aéronef de type turboréacteur comprenant une turbomachine équipée d'un système de fixation selon l'une des revendications pour assurer le maintien d'un panneau interne.

L'invention a également pour objet un procédé de réparation d'une attache équipant une paroi de turbomachine, cette attache incluant un écrou destiné à recevoir une vis d'orientation normale à la paroi, cette vis traversant un élément tel qu'un panneau pour fixer cet élément à la paroi, ce procédé comprenant les étapes de :
- prévoir un système de fixation conforme à celui défini précédemment;
- percer dans la paroi un trou dimensionné pour correspondre avec la portion cylindrique filetée de la douille dudit système,
- fixer la douille, par vissage,
dans le trou pour que la vis puisse être vissée dans l'écrou équipant, en étant flottant, ledit système quand cette vis traverse l'élément pour fixer cet élément à la paroi.

### BRÈVE DESCRIPTION DES DESSINS

La figure 1 déjà décrite est une vue d'ensemble en coupe d'un réacteur à double flux;
La figure 2 déjà décrite est une vue de face montrant une virole comprenant une attache devant être réparée ;
La figure 3 est une vue en éclaté montrant les composants d'un système de fixation selon un premier mode de réalisation non revendiqué ainsi qu'une portion de virole destinée à recevoir ce système et qu'une entretoise et un panneau devant être monté sur cette virole ;
La figure 4 est une vue en éclaté montrant les composants du système de fixation selon le premier mode de réalisation non revendiqué
La figure 5 est une vue en coupe du système de fixation selon le premier mode de réalisation non revendiqué implanté dans une virole et un panneau avec une entretoise fixé à cette virole par l'intermédiaire d'une vis engagée dans ce système de fixation ;
La figure 6 est une vue de face d'une virole comprenant un perçage destiné à recevoir un système de fixation selon le premier mode de réalisation non revendiqué en remplacement d'une attache de panneau détériorée ;
La figure 7 est une vue de face de la virole de la figure 5 dans le perçage de laquelle a été implanté un corps de douille du système selon le premier mode de réalisation non revendiqué ;
La figure 8 est une vue de face montrant la virole de la figure 5 équipée du corps de douille du système selon le premier mode de réalisation non revendiqué dans lequel a été engagé un écrou flottant ;
La figure 9 est une vue de face montrant la virole de la figure 5 équipée du corps de douille portant son écrou flottant en cours de blocage ;
La figure 10 est une vue de face montrant la virole de la figure 5 équipée du corps de douille portant l'écrou flottant bloqué en position dans ce corps de douille conformément au premier mode de réalisation non revendiqué ;
La figure 11 est une vue en éclaté montrant les composants d'un système de fixation selon un second mode de réalisation selon l'invention ainsi qu'une portion de virole destinée à recevoir ce système ;
La figure 12 est une vue en éclaté montrant les composants d'un système de fixation selon le second mode de réalisation de l'invention représenté seul ;
La figure 13 est une vue en coupe du système de fixation selon le second mode de réalisation de l'invention implanté dans une virole.
La figure 14 est une vue en perspective de l'écrou encagé du système de fixation selon le second mode de réalisation ;
La figure 15 est une vue en coupe de l'écrou encagé du système de fixation selon le second mode de réalisation selon l'invention ;
La figure 16 est une vue de face de l'écrou encagé du système de fixation selon le second mode de réalisation de l'invention ;
La figure 17 est une vue en coupe d'un détail de l'écrou encagé du système selon l'invention ;
La figure 18 est une vue d'ensemble montrant une virole équipée d'une douille selon le second mode de réalisation de l'invention et comportant une ouverture donnant accès à la face arrière de cette virole.

### EXPOSÉ DÉTAILLÉ DE MODES DE RÉALISATION PARTICULIERS

L'idée à la base de l'invention est de percer dans la paroi de la virole un trou de relativement grand diamètre pour fixer dans ce trou une douille de diamètre correspondant qui porte dans sa région centrale un écrou destiné à recevoir la vis de fixation du panneau.

Le diamètre de la douille est avantageusement supérieur au diamètre des attaches existantes courantes, pour en simplifier la réparation par remplacement. Ainsi, la réparation d'une attache existante consiste à percer un trou au diamètre approprié entourant cette attache pour conjointement retirer cette attache et former un réceptacle apte à recevoir le nouveau système de fixation en remplacement de l'attache existante.

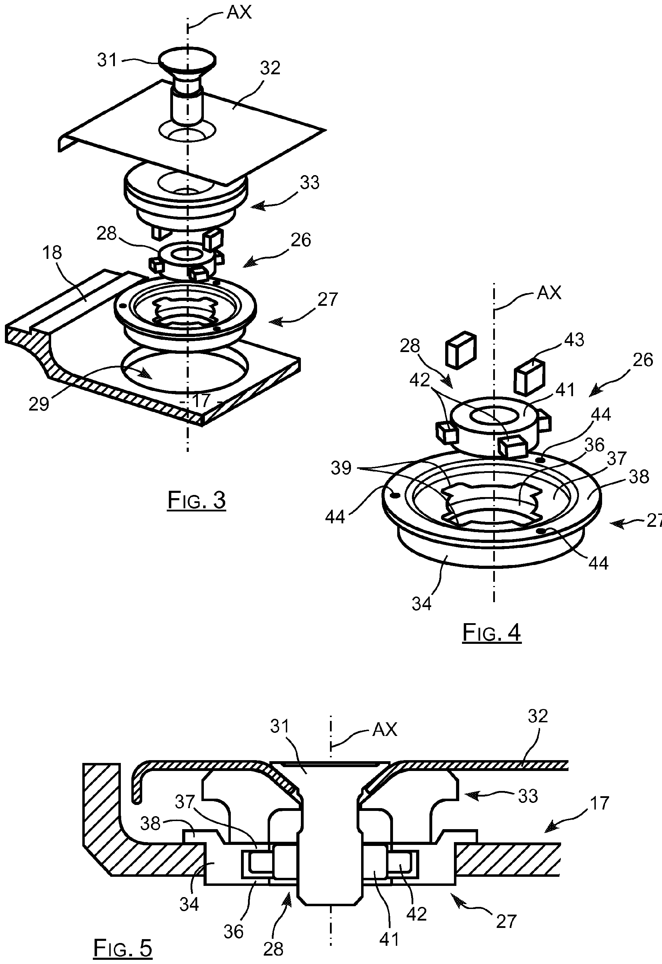

Dans le premier mode de réalisation représenté sur les figures 3 à 10, la douille qui est repérée par 26 comporte un corps principal 27 recevant dans sa région centrale un écrou 28 qui est ici interchangeable et monté flottant, comme visible sur les figures 3 à 5.

Cette douille 26 est destinée à se visser dans un perçage 29 traversant la paroi de la virole 17 au niveau d'une attache à remplacer, qui n'est pas visible sur les figures. Cette douille 26 est destinée à recevoir dans son écrou central 28 une vis de fixation 31 traversant successivement un panneau 32 et une entretoise 33 pour maintenir ce panneau 32 en position à distance de la face externe de la virole 17.

Le corps de douille 27 qui apparaît plus clairement dans la figure 4 comporte une paroi cylindrique extérieure 34 dont les deux bords circulaires se prolongent chacun radialement vers l'intérieur en une paroi en forme de couronne plane, ces deux parois étant repérées par 36 et 37.

La paroi cylindrique 34 présente une face externe qui est filetée pour être avantageusement auto-taraudante, et du côté de sa face interne elle délimite conjointement avec les parois 36 et 37 un espace intérieur annulaire destiné à recevoir et à maintenir l'écrou 28.

Le bord circulaire de la paroi cylindrique 34 qui est prolongé vers l'intérieur par la paroi 37 est également prolongé radialement vers l'extérieur par un rebord ou paroi circonférentielle 38 ayant un diamètre externe supérieur au diamètre extérieur de cette paroi cylindrique 34. Ce rebord 38 constitue un arrêtoir permettant de serrer la douille lorsqu'elle est vissée dans le perçage 29 pour la bloquer en position contre la face externe de la paroi de virole.

La paroi en couronne 36 comporte un bord intérieur circulaire, alors que la paroi plane opposée, à savoir la paroi 37, présente un bord interne ayant une forme basée sur un cercle mais comprenant quatre échancrures ou créneaux 39 s'étendant chacun radialement vers la paroi cylindrique 34. Comme visible sur la figure 4, ces quatre échancrures sont régulièrement réparties en étant espacées de quatre-vingt-dix degrés les unes des autres autour de l'axe de révolution AX du corps de douille 26.

L'écrou 28 présente en vue de dessus un contour externe de même forme que le contour de l'ouverture interne de la paroi 37 en ayant des dimensions légèrement inférieures, de façon à pouvoir s'engager à travers cette ouverture centrale.

Cet écrou 28, qui apparaît plus clairement dans la figure 4, comporte un corps principal torique 41 dont la face interne cylindrique est taraudée et dont la face externe cylindrique a un diamètre légèrement inférieur au diamètre interne de la paroi 37.

Cet écrou comporte quatre bras 42 qui dépassent radialement de la face externe de son corps 41, ces bras 42 étant régulièrement répartis autour de l'axe AX en étant espacés les uns des autres de quatre-vingt-dix degrés autour de cet axe. Comme on le comprend des figures, chaque bras 42 présente des dimensions légèrement inférieures à celles des échancrures 39 de la paroi en couronne plane 37. Chaque bras 42 présente en outre une épaisseur légèrement inférieure à la distance séparant les faces internes des parois 36 et 37 le long de l'axe AX, comme visible dans la figure 5.

La mise en place de l'écrou 28 dans le corps de douille 26 consiste ainsi à le présenter en vis-à-vis de la paroi supérieure 37 avec ses bras 42 en regard des échancrures 39 pour l'engager à l'intérieur du corps de douille jusqu'à ce que ses bras 42 viennent en appui contre la face interne de la paroi en couronne plane 36. L'écrou 28 peut alors être pivoté d'environ un huitième de tour pour placer chacun de ses bras entre deux échancrures consécutives 39 de manière à ce qu'il soit retenu par la paroi 36 pour être complètement emprisonné dans le corps de douille 27.

A ce stade, des cales de blocage 43 peuvent être engagées dans au moins deux des quatre échancrures 39 afin d'empêcher une rotation de l'écrou 28 supérieure à un quart de tour dans le corps de douille, de façon à le bloquer emprisonné dans ce corps de douille. Ces cales peuvent être en matériau élastomère, en matériau composite voire métallique.

L'écrou 28 ainsi monté est flottant dans le corps de douille, il est bloqué en rotation autour de son axe de vissage qui coïncide avec l'axe AX sur les figures, et il possède une mobilité limitée pour les degrés de liberté restants à savoir deux rotations et trois translations. Grâce à cette mobilité, l'écrou peut en particulier s'incliner pour recevoir une vis ayant une orientation différant sensiblement de celle de l'axe AX.

Il est par ailleurs situé en région centrale du corps de douille dont le diamètre externe est significativement supérieur à celui du corps de douille, tout en étant au même niveau que la paroi de la virole lorsque l'ensemble est monté.

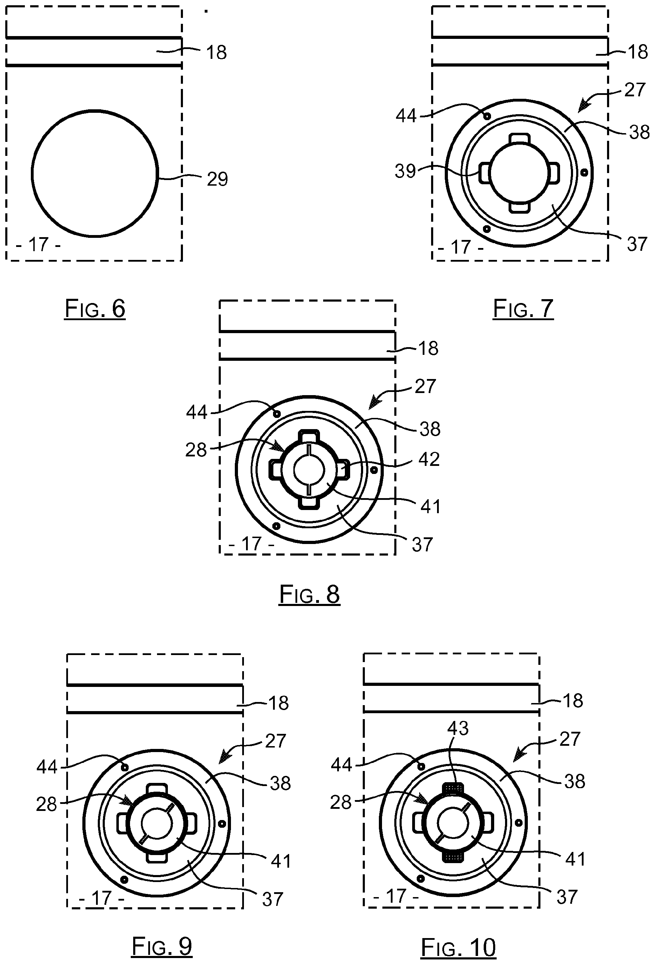

Le montage du système de fixation selon l'invention dans une virole 17 consiste ainsi en premier lieu à réaliser un perçage 29 dans la paroi de cette virole, comme représenté sur la figure 6, d'un diamètre correspondant à celui de la douille.

Dans le cas de la réparation d'une attache existante, le trou est réalisé autour de cette attache pour conjointement retirer cette attache et former un réceptacle apte à recevoir le nouveau système de fixation en la remplaçant.

Ce perçage est réalisé avec un appareillage dédié assurant la récupération de l'opercule percé avec l'attache à remplacer qu'il porte, pour qu'aucun des éléments retirés ne puisse tomber en arrière de la paroi percée. Cet appareillage dédié comporte par exemple un élément de découpe de type scie cloche couplée à un système d'aspiration pneumatique.

Une fois que ce perçage 29 a été réalisé, il est alors taraudé, soit avec un taraud dédié, soit directement avec le corps de douille 27 qui peut être prévu auto-taraudant. Ce taraudage réalise un filetage ayant un pas suffisamment faible pour pouvoir former plusieurs filets sur une hauteur correspondant simplement à l'épaisseur de la paroi formant la virole.

Ce corps de douille est alors vissé et serré dans le perçage 29 pour être bloqué en position dans celui-ci, ce qui correspond au stade de la figure 7. Comme visible sur les figures, le corps de douille 27 comporte trois trous 44 réalisés au niveau de son rebord 38, qui sont espacés de cent-vingt degrés les uns des autres autour de l'axe AX. Ces trous 44 sont prévus pour recevoir un outil correspondant ayant une tête pourvue d'ergots s'engageant dans ces trois trous pour pouvoir entraîner en rotation le corps de douille 27 dans le trou 29 afin de l'y serrer et/ou de tarauder la face interne de ce trou 29.

Sur le plan des dimensions, et comme visible plus clairement dans la figure 5, lorsque le corps de douille est en place et serré sur la paroi de virole, la face externe de la paroi plane 37 s'étend au même niveau que la face externe de la virole sur laquelle est en appui de serrage le rebord 38. Autrement dit, lorsque la douille est en place elle affleure très légèrement à la surface externe de la virole : seul le rebord 38 dépasse très légèrement de cette surface externe, de manière à ne pas perturber l'écoulement aérodynamique dans la région de la réparation.

En fonctionnement, lorsque le panneau est monté, l'entretoise 33 vient en appui directement sur la face externe de la paroi 37 de la douille. Dans le cas de la réparation d'une attache existante par ce système de fixation, cette paroi 37 de la douille se trouve à l'emplacement de la portion de paroi de la virole ayant été détériorée par l'attache défaillante.

Lorsque le corps de douille 27 est en place et bloqué, l'écrou amovible 28 est présenté devant la face 37 pour être engagé dans ce corps de douille 27, comme dans la figure 8.

Une fois que l'écrou 28 est en place dans le corps de douille 27, l'opérateur le fait pivoter d'environ un huitième de tour pour décaler d'autant les bras radiaux 42 des échancrures 39, ce qui permet d'emprisonner cet écrou dans le corps de douille, ce qui correspond à la situation de la figure 9.

Les cales de blocage 43 peuvent alors être mises en place dans deux des échancrures 39, de manière à bloquer l'écrou emprisonné dans le corps de douille, ce qui correspond à la situation de la figure 10. Le maintien de l'écrou par des cales en élastomères permet de plus d'amortir les vibrations, ce qui est d'autant plus utile que l'environnement vibratoire est fortement contraint.

A ce stade, l'écrou est bloqué dans le corps de douille, de sorte que le système de fixation est implanté, ce qui permet de mettre en position un panneau 32 et son entretoise pour engager ensuite une vis de serrage 31 à travers ce panneau et cette entretoise. Cette vis 31 est ensuite serrée dans l'écrou 28, ce qui permet d'assurer la fixation complète du panneau 32 à distance de la paroi externe de la virole.

D'une manière générale, le perçage du trou 29, ainsi que le taraudage et la mise en place de la douille 26 avec son écrou intérieur peuvent être entièrement réalisés depuis la face externe de la paroi de virole 17, sans devoir accéder à la face interne de cette virole qui porte l'attache à remplacer. Cette opération peut être réalisée sans risque de perte d'un composant dans la région située derrière la paroi de virole, appelée espace interveine.

Dans ces conditions, la réparation d'une attache détériorée peut être faite sans démontage complet du moteur portant l'attache à remplacer au niveau de la virole prolongeant son carter intermédiaire : il peut être accédé à cette virole et au carter intermédiaire lorsque le moteur est sous aile, sans le désolidariser ce moteur de l'aile d'aéronef qu'il équipe.

Comme indiqué plus haut, l'écrou présente des dimensions légèrement inférieures à l'ouverture centrale de la paroi 37. Son corps principal torique 41 présente notamment un diamètre externe sensiblement inférieur au diamètre interne de cette ouverture, et les pattes ou bras radiaux 42 ont une épaisseur inférieure à la distance séparant les faces internes des parois 36 et 37.

L'écrou 28 peut être démonté de la douille pour être remplacé par exemple en cas de détérioration de son filetage interne, sans devoir retirer la douille. Le remplacement d'un tel écrou consiste alors à retirer les cales de blocage 43, à faire pivoter l'écrou pour placer ses bras radiaux en regard des échancrures correspondants de façon à permettre son extraction selon la direction axiale. Un nouvel écrou peut alors être remis en place conformément à la procédure indiquée pour les figures 6 à 10.

Il est également possible, dans une approche moins coûteuse de prévoir une douille emprisonnant un écrou ne pouvant pas en être retiré, c'est-à-dire un écrou non remplaçable.

Le montage de ce système de fixation sur une virole neuve ou usagée peut être fait en accédant uniquement à la virole par sa face externe. Il suffit de réaliser dans cette virole un trou taraudé au diamètre approprié pour ensuite visser la douille du système et la serrer dans ce trou taraudé.

Par ailleurs, le système de fixation peut être utilisé pour réparer une attache détériorée, mais il peut aussi, comme indiqué plus haut, être monté directement, c'est-à-dire équiper une virole de réacteur neuf.

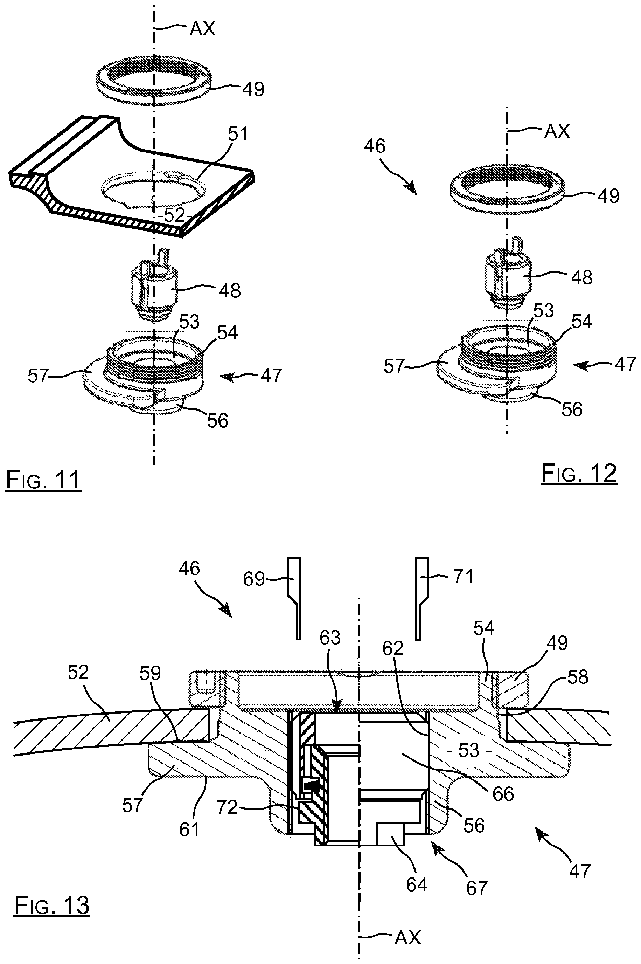

Dans le second mode de réalisation selon l'invention représenté sur les figures 11 à 17, la douille, repérée par 46, comporte un corps principal 47 recevant dans sa région centrale un écrou 48 interchangeable, et recevant à sa périphérie externe filetée une couronne de serrage 49.

Cette douille 46 est destinée à être engagée dans un perçage 51 traversant la paroi d'une virole 52 pour recevoir dans son écrou central 48 une vis de fixation traversant une entretoise et un panneau à maintenir à distance de cette virole.

Le corps de douille 47 qui est formé d'une seule pièce issue de moulage et/ou d'usinage a une forme générale de révolution autour d'un axe AX qui est perpendiculaire à la paroi de la virole lorsque la douille est en place. Ce corps 47 comprend une base torique 53 à section carrée ayant une face est prolongée par une portion tubulaire 54 de fixation à la virole, et une face opposée prolongée par une portion 56 de support d'écrou flottant. Complémentairement, le pourtour externe de cette base torique 53 est prolongé radialement en un rebord d'appui 57 qui s'étend sur environ la moitié de la circonférence du corps de douille.

La portion tubulaire de fixation 54 présente radialement une épaisseur significativement inférieure à l'épaisseur de la base 53 selon la direction radiale. La face externe 58 de cette portion tubulaire, qui coïncide avec la face externe de la base 53, est filetée extérieurement, de façon à recevoir la couronne de serrage 49.

Comme visible sur la figure 13, lorsque le corps de douille 47 est en place, la portion tubulaire de fixation 54 est engagée dans le trou 51 et la couronne de serrage 49 est vissée et serrée dans le filetage de la face externe 58, de façon à enserrer fermement la paroi de la virole 52 entre le rebord 57 et cette couronne de serrage 49. Ce rebord d'appui constitue ainsi un arrêtoir permettant de serrer la douille lorsqu'elle est vissée dans le perçage.

La longueur de la portion tubulaire de fixation 54 le long de l'axe AX correspond sensiblement à l'épaisseur de la couronne 49, et l'épaisseur de la base torique 53 le long de l'axe AX vaut sensiblement le double de l'épaisseur de la paroi formant la virole 52.

Le rebord d'appui 57 présente le long de l'axe AX une épaisseur correspondant à celle de la paroi formant la virole 52, c'est-à-dire valant sensiblement la moitié de l'épaisseur de la base torique 53 le long de l'axe AX. Ce rebord 57 est délimité par une face d'appui 59 s'étendant selon un plan médian pour la base 53 et par une face opposée 61 qui coïncide et/ou prolonge la face plane de la base torique 53 dont dépasse la portion tubulaire 56.

Comme visible sur la figure 13, la portion tubulaire 56 est délimitée intérieurement par une face interne cylindrique taraudée 62 qui s'étend sur toute l'épaisseur du corps de douille le long de l'axe AX pour délimiter un trou central taraudé 63, dans lequel est vissée une cage 66 portant l'écrou flottant 64.

Cette cage 66 comporte à sa face externe cylindrique filetée deux rainures longitudinales, c'est-à-dire s'étendant parallèlement à son axe de révolution, et qui sont situées à des positions diamétralement opposées autour de cet axe, dont l'une apparaît sur les figures en y étant repérée par 68.

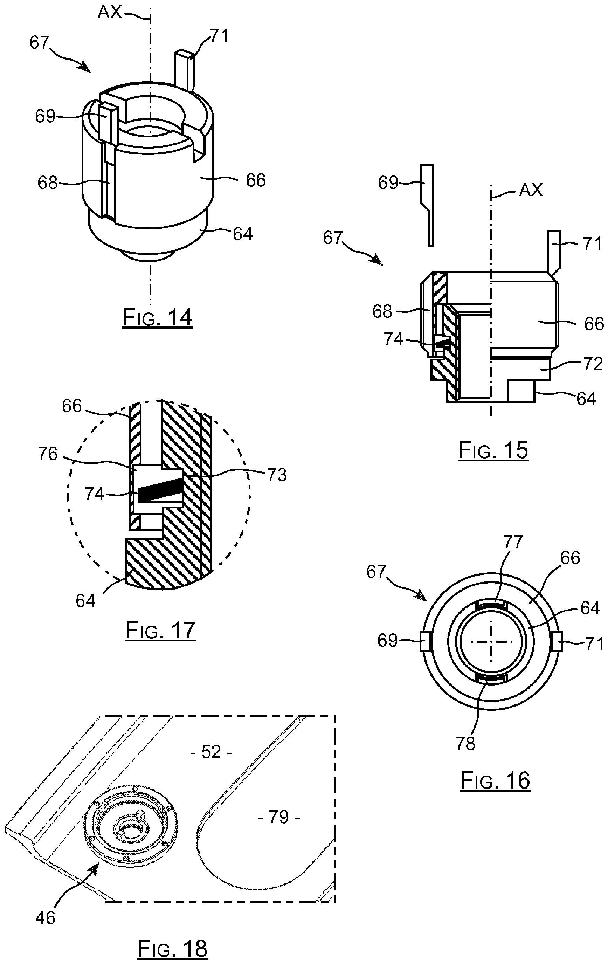

Le montage de l'écrou encagé 67 qui est représenté seul sur la figure 14, dans le corps de douille 47 consiste à visser dans un premier temps la cage 66 dans le trou 63. Une fois que la cage 66 est en place, elle est bloquée en rotation par rapport au corps de douille 47 par deux clavettes 69, 71. La clavette 69 est alors engagée via le trou 63, en force dans la rainure 68 selon la direction AX. Ceci a notamment pour effet de ciseler localement les filets du trou 63, de sorte que la cage 66 ne peut alors plus se dévisser. De manière analogue, la clavette 71 est engagée dans la rainure opposée à la rainure 68 par rapport à l'axe de révolution AX.

A ce stade, l'écrou encagé 67 qui intègre l'écrou flottant 64, est rigidement solidarisé au corps de douille 47, de sorte que l'ensemble est prêt à être monté dans le trou 51 de la virole 52.

Comme visible sur la figure 15, l'écrou flottant 64 a une forme généralement tubulaire engagée en partie dans la cage 66 qui est elle aussi généralement tubulaire, et il comprend un rebord circonférentiel externe 72 formant butée, c'est-à-dire apte à venir en appui sur l'extrémité de la cage.

Comme visible dans la vue de détail de la figure 17, l'écrou 64 comporte à sa face externe cylindrique une gorge circonférentielle 73 dans laquelle est logé un anneau d'arrêt 74 ayant une forme conique de type rondelle de Belleville. Complémentairement, la cage 66 comporte à sa face interne cylindrique une gorge circonférentielle 76 située en vis-à-vis de la gorge 73. L'anneau d'arrêt 74 a un diamètre interne et interne tel qu'il s'engage dans les deux gorges 73, 76 pour les bloquer l'une par rapport à l'autre le long de l'axe AX tout en leur conférant une mobilité limitée le long de cet axe.

L'écrou 64 qui est bloqué en translation selon l'axe AX par rapport à la cage, est également bloqué en rotation autour de cet axe AX par rapport à cette cage. Ce blocage est assuré par deux ergots 77, 78 de la cage 66 dépassant radialement vers l'intérieur pour être engagés dans deux rainures correspondantes prévues à la face externe de cet écrou 64.

Le montage de l'écrou flottant 64 dans la cage 66 est assuré une fois que l'anneau 74 a été dans la gorge externe 73, après quoi l'écrou est engagé partiellement dans la cage 66 avec l'anneau 74 en appui contre le bord de cette cage 66. On positionne alors l'écrou 64 autour de l'axe AX pour que les ergots de blocage en rotation 77 soient en vis-à-vis de ses rainures latérales. L'écrou 64 est alors engagé en force dans la cage 66 à l'encontre de l'anneau d'arrêt 74, jusqu'à ce que cet anneau, en se déformant élastiquement, s'emboîte dans la gorge 76.

L'écrou 64 ainsi monté est flottant dans la cage 66, il est bloqué en rotation autour de son axe de vissage qui coïncide avec l'axe AX sur les figures, et il possède une mobilité limitée pour les degrés de liberté restants, à savoir deux rotations et trois translations. Grâce à cette mobilité, l'écrou peut en particulier s'incliner pour recevoir une vis ayant une orientation différant sensiblement de celle de l'axe AX.

Le montage du système de fixation selon l'invention dans une virole 52 consiste ainsi en premier lieu à réaliser un perçage 51 dans la paroi de cette virole, comme représenté sur la figure 11, d'un diamètre correspondant à celui de la douille.

Dans le cas de la réparation d'une attache existante, le trou est réalisé autour de cette attache pour conjointement retirer cette attache et former un réceptacle apte à recevoir le nouveau système de fixation en la remplaçant.

Ce corps de douille est alors engagé dans le perçage 51 avant de recevoir la couronne 49 vissée et serrée à son extrémité 54, ce qui correspond au stade de la figure 13. Comme visible sur les figures, la couronne 49 comporte trois trous espacés de cent-vingt degrés les uns des autres autour de l'axe AX prévus pour recevoir un outil correspondant ayant une tête pourvue d'ergots s'engageant dans ces trois trous pour entraîner en rotation cette couronne 49 afin de la serrer.

A ce stade, le système de fixation est implanté, ce qui permet de mettre en position un panneau et son entretoise pour engager ensuite une vis de serrage à travers ce panneau et cette entretoise. Cette vis est ensuite serrée dans l'écrou 64 ce qui permet d'assurer la fixation complète du panneau.

Cet écrou est ainsi flottant dans le corps de douille : des jeux fonctionnels subsistant selon les directions radiales et axiales entre le corps de douille et l'écrou qu'il renferme permettent à celui-ci de s'incliner dans le corps de douille pour offrir le meilleur positionnement à la vis qu'il reçoit de manière à tolérer un éventuel écart de position de cette vis.

Par ailleurs, grâce au fait que l'écrou encagé 67 est vissé dans la portion 56 qui dépasse de la base 53 du corps de douille, l'écrou flottant 64 situé dans la région centrale du corps de douille, mais en étant déporté par rapport à la paroi formant la virole 52, de manière à être à distance de celle-ci, tout comme l'écrou flottant constituant la fixation d'origine. La vis qu'il reçoit n'a ainsi pas à être modifiée.

Le système de fixation selon l'invention peut être utilisé pour réparer une attache détériorée, mais il peut aussi, comme indiqué plus haut, être monté directement, c'est-à-dire équiper une virole de moteur neuf.

Avantageusement, il est proposé une fixation du panneau dont l'implantation dans une virole est simple, d'une part sur un moteur neuf et d'autre part sur un moteur existant en remplacement d'une attache détériorée sans devoir déposer le moteur. En effet, le montage de la douille dans le trou de la virole est plutôt aisé dans le cas des deux modes de réalisation, moyennant un accès approprié dans le cas du second mode de réalisation par exemple quand la virole comporte des ouvertures permettant le passage d'une main ou tout outil de préhension de la douille pendant son montage.

A ce titre, on a représenté sur la figure 18 une portion de virole 52 comprenant une ouverture 79 au voisinage de l'attache à réparer, un opérateur pouvant passer sa main dans cette ouverture pour y engager un corps de douille 46 dans un trou et par la face arrière de la virole afin de venir ensuite serrer la couronne 49 sur ce corps de douille pour fixer complètement la douille.

## Revendications

1. Système de fixation destiné à équiper une paroi (52) de turbomachine, incluant un écrou flottant (64) destiné à recevoir une vis (31) d'orientation normale à la paroi (52) lorsque le système est installé, cette vis (31) étant destinée à traverser un élément tel qu'un panneau (32) pour fixer cet élément à la paroi (52), ce système de fixation comprenant une douille (46) incluant un corps de douille (47) portant un écrou encagé (67) incluant une cage (66) portant l'écrou flottant (64), cette cage (66) étant vissée dans un trou taraudé central (63) du corps de douille (47), le corps de douille (47) comportant une portion cylindrique filetée (54) pour être fixé par vissage dans un trou (51) traversant la paroi (52), l'écrou flottant (64) étant solidaire du corps de douille (47) en étant bloqué en rotation autour de son axe de vissage (AX) par rapport au corps de douille (47) tout en ayant une mobilité limitée pour les degrés de liberté autres que la rotation autour de son axe de vissage (AX).

2. Système selon la revendication 1, dans lequel le corps de douille (47) comporte un rebord externe (57) venant en appui sur une face de la paroi (52) dans laquelle ce corps de douille (47) est monté, pour former un appui de serrage du corps de douille (47) contre la paroi (52).

3. Système selon la revendication 1 ou 2, comprenant une couronne taraudée (49) se vissant sur la portion cylindrique filetée (54) du corps de douille pour enserrer la paroi de la virole (52) entre le corps de douille et la couronne (49).

4. Système selon la revendication 1 , dans lequel la cage (66) est bloquée en rotation dans le corps de douille (47) par au moins une clavette (69, 71) insérée à force dans une rainure longitudinale externe de la cage (66), cette clavette ciselant les filets du trou taraudé (63) lorsqu'elle est insérée une fois que la cage est en place dans le corps de douille (47).

5. Moteur d'aéronef de type turboréacteur comprenant une turbomachine équipée d'un système de fixation selon l'une des revendications précédentes pour assurer le maintien d'un panneau interne.

6. Procédé de réparation d'une attache équipant une paroi (52) de turbomachine, cette attache incluant un écrou (64) destiné à recevoir une vis (31) d'orientation normale à la paroi (52), cette vis (31) traversant un élément tel qu'un panneau (32) pour fixer cet élément à la paroi (52), ce procédé comprenant les étapes de :
- prévoir un système de fixation selon l'une des revendications 1 à 4;
- percer dans la paroi (52) un trou (51) dimensionné pour correspondre avec la portion cylindrique filetée (54) de la douille (47) dudit système,
- fixer la douille (47), par vissage,
dans le trou (51) pour que la vis (31) puisse être vissée dans l'écrou (64) équipant, en étant flottant, ledit système quand cette vis (31) traverse l'élément pour fixer cet élément à la paroi (52).

## Patentansprüche

1. Befestigungssystem zur Ausrüstung einer Wand (52) einer Turbomaschine, mit einer schwimmend gelagerten Mutter (64) zur Aufnahme einer Schraube (31) mit normaler Ausrichtung zu der Wand (52), wenn das System eingebaut ist, wobei die Schraube (31) dazu vorgesehen ist, ein Element wie z.B. eine Platte (32) zu durchdringen, um das Element an der Wand (52) zu befestigen, wobei das Befestigungssystem eine Hülse (46) mit einem Hülsenkörper (47) umfasst, der eine Käfigmutter (67) trägt, welche einen die schwimmend gelagerte Mutter (64) tragenden Käfig (66) aufweist, wobei der Käfig (66) in eine mittige Gewindebohrung (63) des Hülsenkörpers (47) eingeschraubt ist, wobei der Hülsenkörper (47) einen zylinderförmigen Gewindeabschnitt (54) aufweist, um durch Verschraubung in einem die Wand (52) durchdringenden Loch (51) befestigt zu werden, wobei die schwimmend gelagerte Mutter (64) mit dem Hülsenkörper (47) fest verbunden ist, indem sie um ihre Schraubachse (AX) bezüglich des Hülsenkörpers (47) drehgesichert ist, aber gleichzeitig für die anderen Freiheitsgrade als die Drehung um ihre Schraubachse (AX) eine begrenzte Beweglichkeit aufweist.

2. System nach Anspruch 1, wobei der Hülsenkörper (47) einen Außenflansch (57) aufweist, der auf einer Fläche der Wand (52), in der der Hülsenkörper (47) angebracht ist, in Anlage kommt, um eine Klemmanlage des Hülsenkörpers (47) an der Wand (52) zu bilden.

3. System nach Anspruch 1 oder 2, mit einem Gewindekranz (49), der sich auf dem zylinderförmigen Gewindeabschnitt (54) des Hülsenkörpers verschraubt, um die Mantelwand (52) zwischen dem Hülsenkörper und dem Kranz (49) einzuklemmen.

4. System nach Anspruch 1, wobei der Käfig (66) in dem Hülsenkörper (47) durch mindestens einen Keil (69, 71) drehgesichert ist, der in eine äußere Längsnut des Käfigs (66) eingepresst ist, wobei der Keil die Gewindegänge der Gewindebohrung (63) einschneidet, wenn er eingesetzt wird, sobald sich der Käfig in dem Hülsenkörper (47) an seinem Platz befindet.

5. Flugzeugmotor vom Strahltriebwerkstyp mit einer Turbomaschine, die mit einem Befestigungssystem nach einem der vorhergehenden Ansprüche ausgerüstet ist, um die Halterung einer Innenplatte zu gewährleisten.

6. Verfahren zur Reparatur einer Befestigung einer Wand (52) der Turbomaschine, wobei die Befestigung eine Mutter (64) zur Aufnahme einer Schraube (31) mit normaler Ausrichtung zu der Wand (52) aufweist, wobei die Schraube (31) ein Element wie z.B. eine Platte (32) durchdringt, um das Element an der Wand (52) zu befestigen, wobei das Verfahren die folgenden Schritte umfasst:
- Vorsehen eines Befestigungssystems nach einem der Ansprüche 1 bis 4;
- Bohren eines Lochs (51), das so bemessen ist, dass es dem zylinderförmigen Gewindeabschnitt (54) der Hülse (47) des Systems entspricht, in die Wand (52),
- Befestigen der Hülse (47) durch Verschraubung in dem Loch (51), so dass die Schraube (31) in die durch die schwimmende Lagerung an dem System vorgesehene Mutter (64) geschraubt werden kann, wenn die Schraube (31) das Element durchdringt, um das Element an der Wand (52) zu befestigen.

## Claims

1. Attachment system designed to be fitted on a turbomachine wall (52), comprising a floating nut (64) designed to receive a screw (31) oriented normal to the wall (52) when the system is installed, this screw (31) being designed to pass through an element such as a panel (32) to fix this element to the wall (52), this attachment system comprising a bushing (46) comprising a bushing body (47) supporting a caged nut (67) comprising a cage (66) supporting the floating nut (64), this cage (66) being screwed in a tapped central hole (63) of the bushing body (47), the bushing body (47) comprising a threaded cylindrical portion (54) to be fixed by screwing in a hole (51) passing through the wall (52), the floating nut (64) being fixed to the bushing body (47) and prevented from rotation about its screwing axis (AX) relative to the bushing body (47) while having limited mobility for degrees of freedom other than rotation about its screwing axis (AX).

2. System according to claim 1, in which the bushing body (47) comprises an external rim (57) that bears on a face of the wall (52) in which this bushing body (47) is fitted, to form a bearing for tightening the bushing body (47) in contact with the wall (52).

3. System according to claim 1 or 2, comprising a threaded ring (49) screwing onto the threaded cylindrical portion (54) of the bushing body to tighten the wall of the shell (52) between the bushing body and the ring (49).

4. System according to claim 1, in which the cage (66) is prevented from rotating in the bushing body (47) by at least one key (69, 71) force fitted into an external longitudinal groove in the cage (66), this key chiselling into the threads of the threaded hole (63) when it is inserted once the cage is in position in the bushing body (47).

5. Turbojet type aircraft engine comprising a turbomachine fitted with an attachment system according to one of the previous claims to hold an internal panel in position.

6. Method of repairing a fastener fitted on a turbomachine wall (52), this fastener including a nut (64) into which a screw (31) will be fitted in the direction normal to the wall (52), this screw (31) passing through an element such as a panel (32) to fix this element to the wall (52), this method including the following steps:
- obtain an attachment system according to one of claims 1 to 9;
- drill a hole (51) in the wall (52) sized to correspond to the threaded cylindrical portion (34; 54) of the bushing (47) of said system,
- fix the bushing (47) by screwing into the hole (51) so that the screw (31) can be screwed in the nut (64) floating in said system when this screw (31) passes through the element to fix this element to the wall (52).
